# EUROPEAN PATENT APPLICATION

(11) **EP 4 006 111 A1**
(43) Date of publication of application: **01.06.2022**
(21) Application number: 20210566.4
(22) Date of filing: 30.11.2020
(51) Int. Cl.: C09C 1/04, C09C 3/06

(54) **METHOD FOR PREPARING ZINC SULFIDE**

(71) Applicant: Venator Germany GmbH, 47198 Duisburg (DE)
(72) Inventor: Lange, Thomas, 47057 Duisburg (DE); Rohe, Markus, 47445 Moers (DE); Willeke, Michael, 48249 Dülmen (DE)
(74) Representative: Nobbe, Matthias

(57) **Abstract**

The present invention relates to a particulate zinc sulfide, in particular a photostable, particulate cobalt-free ZnS pigment having a ZnS core, a ZnO layer on the ZnS core, and a silica layer deposited on the ZnO layer, methods for preparing the Zinc sulfide and the use thereof.

## Description

The present invention relates to a particulate zinc sulfide, in particular it relates to a photostable, particulate cobalt-free ZnS pigment having a ZnS core, a ZnO layer on the ZnS core, and a silica layer deposited on the ZnO layer, methods for preparing the Zinc sulfide and the use thereof.

Due to its high refractive index (n of about 2.37), ZnS is often used as a white pigment. Its low Mohs' hardness makes it particularly suitable as a polymer additive. However, the photocorrosion of pure ZnS significantly limits its use as a white pigment, which leads to greying or destruction of the binder. This thermodynamically strongly favored decomposition process is caused by the simultaneous presence of water, e.g. in the form of air humidity, and UV light, whereby Zn⁰, S⁰, ZnSO₄, ZnO, Zn(OH)₂, and H₂ are formed as corrosion products. Currently, it is common practice to incorporate small amounts of cobalt, such as for example, in an amount of several hundred ppm, into the ZnS lattice, which prevents photocorrosive greying.

Thus, AT235438 relates to a process for stabilizing zinc sulfide pigments, wherein the pigment is immersed in an aqueous solution of an alkali salt of the isopolyacids of silicon or phosphorus and this suspension is flocculated with a solution of a mixture of alkaline earth and/or aluminum chloride, the coated pigment is separated, dried and ground, wherein a flocculation solution is used, which additionally contains at least one salt of the metals Fe, Co, Ni, Cu, Cd, Ti, Zr, Ce and the rare earth metals, preferably chlorides or nitrates, in at least 0.03 wt.-%, preferably 0.05-0.5 wt.-% of metal, based on the pigment.

DE102013105794A1 discloses a method for producing Co/metal oxide/ZnS composite particles comprising the steps of applying a Co²⁺-containing layer to ZnS particles by treating the ZnS particles with a solution of a Co salt, followed by adding an alkaline solution of a metal oxide precursor compound or mixtures thereof, lowering the pH value of the suspension to a range from pH 5 to 8 followed by an optional aging, then calcining the separated particles.

In order to obtain UV-stable ZnS pigments, the pigment industry has been incorporating transition metals such as Co, Ni, or Fe into the ZnS lattice in small quantities for almost one century. These metals serve as a "buffer" for the photogenerated charge carriers and thus significantly or completely reduce the number of charge carriers. Fe, however, leads to greying of the white pigment.

However, due to the demand of the REACH Commission to replace heavy metal-containing compounds with non-toxic compounds in the long term or due to possible restrictions in cobalt procurement (e.g. ethically questionable cobalt extraction; increasing cobalt price due to higher demand from the e-mobility sector), the cobalt doping approach may have to be substituted in the future. Consequently, an alternative was sought early on to produce a photostable but cobalt-free ZnS white pigment. Since ZnS does not corrode under UV irradiation as long as water is kept away from the surface, a wet chemical method was developed to coat the white pigment base body with a thin but dense layer so that the ZnS base pigment is protected against contacting with water.

In order to increase weather- and photostability and to avoid binder destruction, proposals have been made in the field of wet chemical coating of ZnS particles as will be mentioned in the following, but the inhomogeneity of the layer often poses a major problem.

US2259481 discloses a process of treating ZnS pigment which comprises subjecting the pigment composition comprising the ZnS base pigment and an insoluble reaction product of a soluble silicate and a precipitating salt selected from the class consisting of alkaline earth metal salts and zinc salts to the treatment of carbon dioxide to convert the metal oxide present in the insoluble silicate into the corresponding carbonate. Thus, the obtained ZnS pigment has a coating of MCO₃•YSiO₂, wherein Y represents the molecular ratio of SiO₂ to metal carbonate.

US2885366 discloses a ZnS phosphor product having ZnS as cores and hydrated, amorphous silica bound on the ZnS core as an envelope. The product can be prepared by a method comprising adding active silica in water to an aqueous suspension of a finely divided ZnS, said ZnS having on the surfaces a metal compound selected from the group consisting of oxides and silicates of a metal which forms an insoluble silicate at a pH between 7 and 11, the pH of said suspension being maintained between 8 and 11.

DE1151892B discloses a method of applying silicate coatings to particles of zinc sulfide pigments, wherein zinc silicate is precipitated in an aqueous suspension of the zinc sulfide pigment by the reaction between an aqueous solution of a water-soluble silicate, and a solution of a zinc salt in quantities such as to provide in the coated pigment a SiO₂ content of 1 to 6 wt.-%, and wherein the zinc sulfide pigment which has been thus treated is separated from the solution and heated for a period of 1 to 20 minutes to a temperature between 600 and 900°C.

Although the deposition of silicate on the surface of zinc sulfide might provide a silicate layer, the problem was observed that said silicate layer is not sufficiently dense so as to protect the zinc sulfide from contacting with water.

Recently, WO2017036575 discloses a method of preparing coated ZnS pigment with a coating of silica agglomerates on the surface of ZnS. The coated ZnS pigment can be prepared by suspending ZnS in water and mixing with a water-glass solution at a pH suitable for hydrolysis which is selected so that the SiO₂ is deposited directly onto the pigment, and the pH is kept constant by simultaneous precisely controlled addition of a base and/or acid, and the zinc sulfide pigment coated in this way is separated off, washed, dried and subsequently calcined at 200-600 °C and finally sieved.

Said WO2017036575 also describes coating ZnS with SiO₂ by treating the base ZnS pigments with a solution of water glass, wherein only water glass is added to the ZnS suspension, which is then acidified. The aim is to produce photostable ZnS which is assumed to be used almost universally in all conceivable indoor and outdoor applications. However, the same experiments as carried out in said WO2017036575 were repeated by the inventors of the present invention and revealed that said ZnS cannot be sufficiently coated with a protective SiO₂ layer using this simple procedure.

As the coating layers have to be as robust and dense as possible to ensure a good weather resistance and photostability, the studies mentioned above have usually only achieved a slightly increased stability.

Despite the efforts made in the prior art, the low affinity of the ZnS surface with respect to silica is particularly problematic, which accounts for the unsatisfactory binding ability of such coatings to the ZnS particles.

Thus, there is a constant need for a ZnS which shows improved weather resistance and photostability.

The above problem underlying the present invention is solved by the provision of the coated ZnS particles and the method for the preparation thereof according to the present invention.

According to the present invention, it was the idea of the inventors of the present application that the cobalt-free ZnS base pigment is not acidified as usual after the calcination step, so that a slightly oxidized layer of ZnO is maintained on the surface of the base zinc sulfide pigment particles. These particles having a ZnS core and a ZnO layer-like structure on the surface are referred to in the following as ZnS(O).

According to the inventors, the proportion of the zinc oxide layer-like structure on the surface can be varied by adjusting the calcination temperature for the ZnS particles in the range of 550 - 800 °C for a time range of generally 0,5 to 4h.

In the context of the invention, a layer-like structure on the surface is meant to define a layer structure on the surface of the particles which layer might be quite thin and porous up to a more uniform layer that comes close to a dense layer. The main function of said ZnO layer-like structure on the surface is to build up anchor points for the silicate layer to be deposited in the next process step.

The obtained ZnS(O) is then treated with alkali water glass, preferably sodium water glass, to coat the ZnS(O) particles with a silica layer. For this purpose, the pH-value of the ZnS(O) water glass suspension is first kept at a pH-value of 9 to 10 at an elevated temperature of 60-90 °C for about 1 to 4 hours, preferably 2 hours, and then slowly reduced to a pH-value of 5.5 with H₂SO₄. This is followed by a 24-hour aging step.

The inventors found out that the addition of a salt such as NaCl, KCI or K₂SO₄ or mixtures thereof during the coating process has a positive effect on the deposition of SiO₂ on the surface of ZnS(O) and thus on the photostability of the SiO₂-coated ZnS(O) particulate product. Thus, the ZnS particles can be produced which, despite the absence of cobalt, do not show any greying under intensive UV irradiation (such as for example a photostability of 90 % comparable to Sachtolith L). An optional subsequent calcination step in a CO₂ atmosphere further increases the photostability (photostability > 90 %).

Thus, the present invention is directed to a particulate cobalt-free ZnS pigment, having a ZnS core, a ZnO layer on the ZnS core, and a silica layer deposited on the ZnO layer. The ZnO layer on the ZnS core may be a thin layer with porous sections up to a more dense layer covering the ZnS core depending on the amount of ZnO on the ZnS core.

In an embodiment, the present invention is directed to a particulate cobalt-free ZnS pigment, wherein said ZnO layer has a weight percentage in the range of 0 < x ≤ 10 wt.-%, preferably in the range of 2-8 wt.-%, more preferably in the range of 3-7 wt.-%, particularly preferably in the range of 4-5 wt.-% with respect to the total weight of ZnS base particle having the ZnO layer on top. The ZnO layer is formed on the surface of ZnS particle by calcining the particulate ZnS base pigment, preferably in the presence of oxygen, and said ZnO layer can form strong chemical bonding interactions with silica deposited on and forming on the ZnS(O) particle a preferably dense silica layer, which after optional calcination, protects the ZnS from contacting with water/humidity.

In the context of the present invention, dense is to be understood that the coating layer is continuous and non-porous, so that said dense SiO₂-coating layer protects the ZnS base pigment from contacting with water or humid.

In a further preferred embodiment of the present invention, the silica layer has a weight percentage in the range of 0 < y ≤ 6 wt.-%, preferably in the range of 1-6 wt.-%, more preferably in the range of 3-6 wt.-% calculated as SiO₂, calculated with respect to the total weight of the final ZnS pigment having the silica layer on the ZnO. The above silica content of the silica coating layer on the one hand provides satisfactory protection from contacting with water/humidity, on the other hand, the obtained coated particles meet the specifications for the L* and a* values. When the results of the scattering behavior are considered, a coating of up to 6 wt.-% SiO₂ slightly reduces the CBU and Sᵣₑₗ value compared to the uncoated reactant and a coating of 30 wt.-% SiO₂ leads to a significant deterioration. As will be discussed in the following, a maximum of 6 wt.-% SiO₂ should be used, since a further increase of the SiO₂ content does not lead to an improvement of the photostability.

The present invention is further directed to a method for preparing particulate cobalt-free ZnS pigment as detailed before, comprising the steps of:
a) calcining particulate ZnS base pigment at a temperature in the range of 400-1000 °C, preferably in the range of 500-900 °C, preferably in the range of 550-850 °C, more preferably in the range of 600-800 °C, particularly preferably in the range of 630-800 °C, in the presence of oxygen for a period of 0.5-4 hours, preferably 1-3 hours, more preferably 1.5-2.5 hours;
b) providing an aqueous suspension of the particulate ZnS pigment obtained in step a);
c) adding to the aqueous suspension of step b) an aqueous solution of a water-soluble silicate, preferably an alkaline metal silicate or ammonium silicate, particularly preferably water glass, at a temperature in the range of 20-100 °C, preferably in the range of 30-95 °C, more preferably in the range of 40-90 °C, particularly in the range of 60-90 °C, at a pH-value in the range of 7-12, preferably at a pH-value in the range of 8-11; more preferably at a pH-value in the range of 9-10, followed by keeping the mixture suspension at the above temperature and pH-value for a period of 0.5-4 hours;
d) adjusting the pH of the suspension of step c) over a time of at least 30 minutes to the range of 4.5-6.5, preferably to the range of 5-6, particularly to 5.5 with an acid;
e) aging the suspension obtained from step d) by stirring said suspension at room temperature for a period of 4-48 hours, followed by filtering off the obtained particles, optional washing the obtained particles, drying the obtained particles at 130 °C up to weight constancy, optionally followed by calcining the obtained particles at a temperature in the range of 400-800 °C, preferably in the range of 500-700 °C, more preferably in the range of 550-650 °C for a period of 0.5-4 hours, preferably in an inert atmosphere, preferably in a CO₂ atmosphere, followed by optional grinding, and optional sieving.

In an embodiment, in step c) a salt, preferably an alkaline metal salt, preferably a lithium, sodium, or potassium salt or a mixture thereof, is added to the suspension in step c). Using a salt, such as an alkaline metal, imparts the silica-coated particulate cobalt-free ZnS pigment with better photostability against corrosive greying.

In a further embodiment, the present invention the salt is a salt of an inorganic acid, preferably of hydrochloric acid, nitric acid, sulfuric acid, phosphoric acid, chloric acid, boric acid or mixture thereof, more preferably of nitric acid or sulfuric acid, particularly preferably of sulfuric acid. Adding said salt during the coating process significantly increases the photostability of the zinc sulfide pigment. Furthermore, the anions of the salts, such as nitric anions and sulfate anions make the coating so efficient that the aging time in step e) can be reduced considerably.

The salt can be added to the ZnS(O)-water glass suspension in an amount to obtain an ionic strength of 0 - 2 mol/L, preferably in the range of 0.01-1 mol/L.

In another embodiment of the inventive process, the water glass is used in an amount to obtain a silica layer in a weight percentage in the range of 0 < y ≤ 6 wt.-%, preferably in the range of 1-6 wt.-%, more preferably in the range of 3-6 wt.-% calculated as SiO₂, calculated with respect to the total weight of the final ZnS pigment.

The inventive particulate cobalt-free ZnS pigment can be used as an additive or white pigment in paints, varnishes, powder coatings, printing inks, security printing inks, plastics, molded parts, ceramic materials, glasses, enamels, in cosmetic formulations, for the production of pigmentary slurries with water, organic and/or aqueous solvents, for the production of pigment preparations and dry preparations, in glass fiber reinforced polyamides, or in specific formulations, or in a polymer matrix, in particular an additive in polymer industry, as luminescent material or optical materials.

The invention is further illustrated by means of the attached drawings. In the drawings, the figures show:

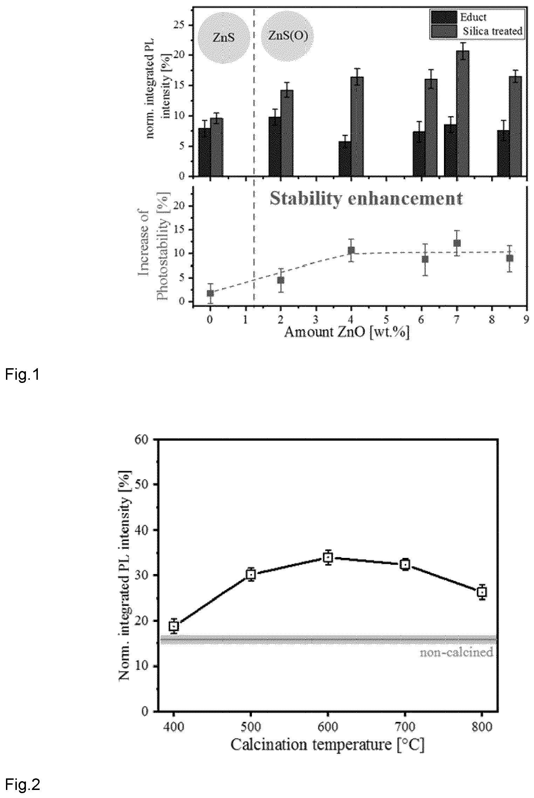

- Fig.1: Normalized Photoluminescence (PL) intensity after 40 minutes of UV irradiation (λ = 330 nm) as a function of the ZnO content before and after silica coating. Parameters for coating: T_{deposition} = 90 °C; pH-value: 5.5; aging: 1 day; applied SiO₂ content: 30 wt.-%.
- Fig.2: Normalized PL intensity after 40 minutes of UV irradiation (λ= 330 nm) as a function of the calcination temperature. The stability the non-calcined ZnS(O)/SiO₂ is shown in grey. Coating parameters: 6.1 wt.-% ZnO; T_{deposition}: 90 °C; pH-value: 5.5; SiO₂ content: 30 wt.-%; ageing 1 day; calcination for 2 hours under CO₂ atmosphere.

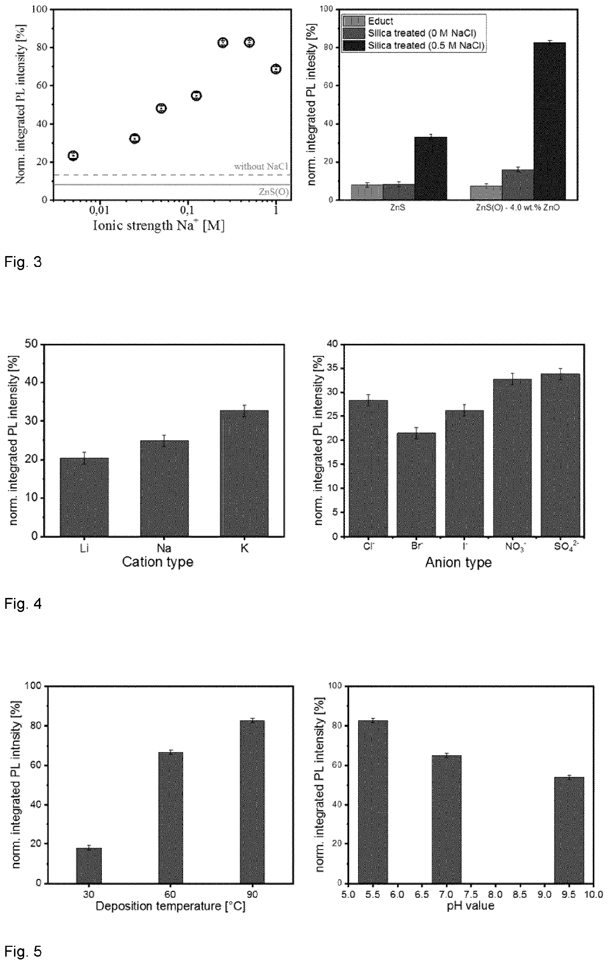

- Fig.3: Left: Normalized PL intensity after 40 minutes of UV irradiation (λ= 330 nm) as a function of the ionic strength of Na⁺ during coating. The reference values of untreated ZnS(O) (solid line) and ZnS(O) coated in absence of NaCl (dotted line) are shown in grey. Parameters during coating: pH-value: 5.5; T_{deposition}: 90 °C; ageing time: 1 day; 6.1 wt.-% ZnO; SiO₂ content used: 30 wt.-%. Right: Normalized PL intensity after 40 minutes UV irradiation (λ= 330 nm) of ZnS and ZnS(O) 6.1 wt.-% after silica treatment in the absence or presence of NaCl (0.5 M).
- Fig.4: Normalized PL intensity after 40 minutes UV irradiation (λ= 330 nm) as a function of cation type (left; counter ion: Cl⁻) and anion type (right; counter ion: K⁺) during coating. Parameters during coating: pH-value: 7; T_{deposition}: 30 °C; aging time: 1 day; 6.1 wt.-% ZnO; applied SiO₂: 30 wt.-%; salt concentrations 0.1 M each (exception: c(K₂SO₄)= 0.05 M).
- Fig.5: Normalized PL intensity after 40 minutes UV irradiation (λ= 330 nm) as a function of deposition temperature (left) and pH-value (right) in the presence of 0.5 M NaCl. Parameters for the coating: aging time: 1 day; 6.1 wt.-% ZnO; 0.5 M NaCl; pH 5.5 or T_{deposition} = 90 °C; applied SiO₂ content: 30 wt.-%.

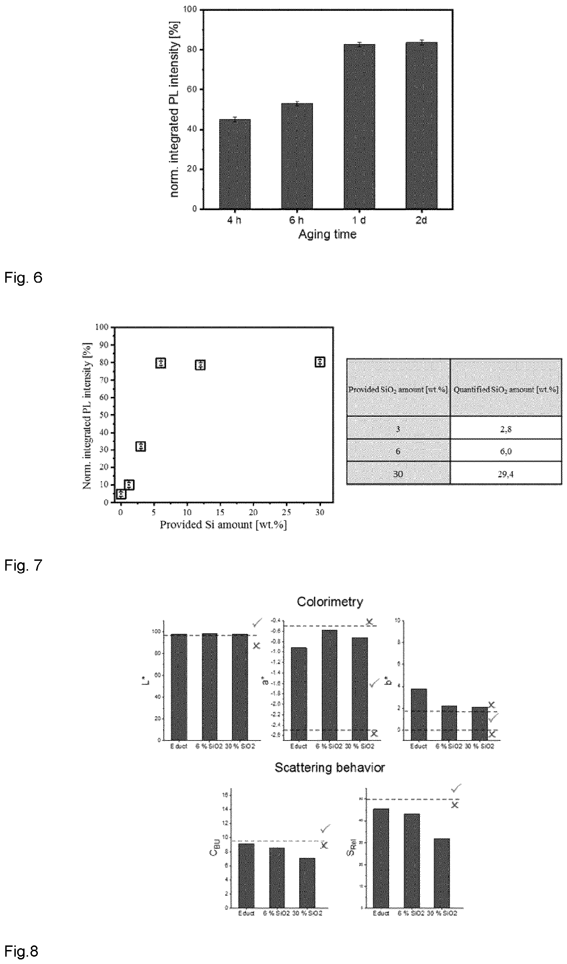

- Fig.6: Normalized PL intensity after 40 minutes of UV irradiation (λ= 330 nm) as a function of aging time in the presence of 0.5 M NaCl. Coating parameters: T_{deposition}: 90 °C; pH-value: 5.5; 6.1 wt.-% ZnO; 0.5 M NaCl; SiO₂ content used: 30 wt.-%.
- Fig.7: Left: Normalized PL intensity after 40 minutes of UV irradiation (λ= 330 nm) as a function of the SiO₂ fraction used (based on ZnS) in the presence of 0.5 M NaCl; lamp power: 50 mW (λ = 330 ± 2 nm). Coating parameters: T_{deposition}: 90 °C; pH-value: 5.5; 4.0 wt.-% ZnO; 0.5 M NaCl; ageing time 1 day. Right: By means of wet chemical quantification of certain SiO₂ content of the coated samples (calculated from the data obtained for the Si content).
- Fig.8: Colorimetry and scattering behavior of ZnS(O)-4.0 wt.-% ZnO with and without silica coating. The limit values for use as white pigment are shown by the dotted lines.

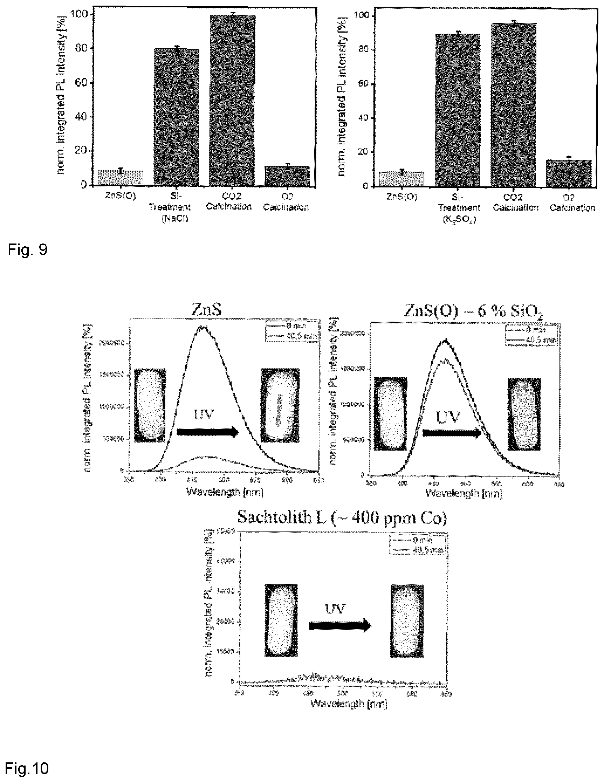

- Fig.9: Top: Influence of the calcination atmosphere on the normalized PL intensity after 40 minutes of UV irradiation (λ= 330 nm) Parameters for coating: 6.1 wt.-% ZnO; T_{deposition}: 90 °C; pH-value: 5.5; aging: 1 day; salts: 0.5 M NaCl or 0.05 M K₂SO₄; calcination: 2 hours under CO₂ atmosphere or synthetic air.
- Fig.10: PL spectra before and after UV irradiation of pure cobalt-free ZnS (top right), ZnS(O) with 6 wt.-% SiO₂ (top right), and Sachtolith L (bottom), and photographs of the irradiated areas.

The influence of the ZnO layer obtained by calcination under ambient air on the water glass treatment is shown in Fig.1. No salts have been added during the preparation of the coated ZnS and ZnS(O) particles. As shown in the first pair of columns in the upper diagram of Fig.1, after the cobalt-free ZnS base pigment without an oxide layer was treated with a water glass solution, no significant increase in photostability is observed, which is due to the low affinity of the ZnS surface for silica. However, when the surface of the ZnS particles is slightly oxidized by calcination under ambient air prior to silica coating, then ZnO contents of between 3 and 8 wt.-% by weight with respect to the total weight of ZnS(O) lead to an increase in photostability of about 10 %. A ZnO content of 4 wt.-% or more (calcination at 630 °C) thus contributes to an improved silica coating of the ZnS base pigment. With a ZnO content of 5-6 wt.-%, the ZnS(O) achieved the best photostability with an applied SiO₂ content of 30 wt.-% with respect to the total weight of ZnS(O)/SiO₂.

To dehydrate the deposited SiOₓH_{y} and to obtain a dense SiO₂ layer on the surface of ZnS(O), ZnS(O) treated with water glass was calcined at a temperature between 400 and 800 °C in a CO₂ atmosphere. As shown in Fig. 2, up to a calcination temperature of 600 °C, an increase of the photostability of up to 35 % is observed. However, a further temperature increase has a negative effect on the photostability, indicating a negative effect on the stability of the silica coating on the ZnS(O) surface much higher than a temperature of 600 °C.

### Coating of ZnS(O) in the Presence of Salts - Influence of Different Salts

Although the photostability could be increased from about 7 to 35% by applying a surface oxide layer followed by water glass treatment and calcination, this is not yet sufficient to prevent photocorrosive greying. In order to prevent optically detectable greying of the ZnS particles under intensive UV irradiation, a photostability of at least 90% is required. This object can be achieved by adding salts during water glass treatment.

First, the influence of NaCl at different concentrations was investigated. An extremely positive effect of the NaCl addition in the context of the silica-coating was shown. As shown in the left diagram of Fig. 3, ionic strengths of Na⁺ of 0.25 and 0.5 M lead to a photostability of 80 %. As indicated in the right diagram of Fig. 3, when the silica coating process of ZnS without an oxide layer is performed in the presence of NaCl, a significant increase in photostability of from about 7 to 35 % is also observed. In sharp contrast, the combination of the presence of an oxide layer on the surface of the ZnS cores and the presence of NaCI-salt leads to a much higher photostability of the zinc sulfide pigment.

Furthermore, the influence of the types of added cations or anions was investigated in detail. As shown in the left diagram of Fig. 4, when the alkali metal nitrates are used, an increase of the photostability from Li via Na to K is observed. The addition of potassium ions thus proves to be particularly beneficial. It should be noted that the achieved photostability of about 32 % by the addition of KNO₃ is not comparable to the results shown in Fig. 3 since the experimental conditions are different. The T_{deposition} of 30 °C and pH-value 7 also have a significant influence as will be discussed in the following. When different potassium salts are added during the water glass treatment, an effect of the anion type is also observed. Here, nitrate or sulfate ions have a particularly beneficial effect on the coating. Since sulfates are much less harmful than nitrates, the sulfate salts should be preferably used.

### Influence of Further Synthesis Conditions

In order to further optimize the silica coating on the surface of ZnS(O), the influence of the deposition temperature, pH value, aging time, and Si content was investigated. As the temperature is varied from 30 to 90 °C during the water glass treatment, a significant increase of the photostability with rising temperature is observed as shown in the left diagram of Fig. 5. Thus, a higher temperature has a positive effect on the silica-coating of the ZnS(O) particles.

The addition of the water glass solution during the course of the coating is initially carried out at pH 9.5, whereas a subsequent reduction of the pH value also has a positive effect on the photostability of the resulting SiO₂-coated ZnS(O). As indicated in the right diagram of Fig. 5, acidification to a pH-value of 5.5 results in the highest photostability of the resulting SiO₂-coated ZnS(O).

Furthermore, the aging by stirring the suspension at room temperature during the course of the coating was varied between a period of 4 and 48 hours. As shown in Fig. 6, It was found that an aging time of one day for the suspension is necessary to achieve a maximum photostability of the SiO₂-coated ZnS(O). Due to the 24-hour aging time, this procedure is unfortunately not yet feasible in a continuous process. However, it should be noted that NaCl was added during the experiments to investigate the aging time, whereas K₂SO₄ has a much more positive effect on the condensation-polymerization of the SiOₓH_{y}. Thus, the aging time of 1 day could be further reduced by adding K₂SO₄.

In order to identify the minimum amount of SiO₂ required, the amount of silicate used calculated as the amount of SiO₂ was varied between 0 and 30 wt.-% (30 wt.-% SiO₂ is only relevant from an academic point of view). As shown in Fig. 7, an increase of the SiO₂ content of up to 6 wt.-% (with respect to the total weight of ZnS(O)/SiO₂) leads to a significant improvement of the photostability of the SiO₂-coated ZnS(O). If more than 6 wt.-% silicate is provided in the solution, there is no improvement in photostability, although more SiO₂ was deposited after Si-quantification on the surface. A proportion of 6 wt.-% SiO₂ is therefore already sufficient to envelop the particles.

### Pigment Properties

Within the variation of the SiO₂ content, the pigment properties of ZnS(O) (4 wt.-% ZnO) with 0, 6, and 30 wt.-% SiO₂ were also investigated. As shown in Fig. 8, the coated particles meet the specifications for the L* and a* values, but exhibit a slight yellow tinge, which can be ascribed to the high b* value of the reactant. Although this value was reduced after coating with SiO₂, the value of about 2.1 is still too high. When the results of the scattering behavior are considered, it can be seen that a coating with 6 wt.-% SiO₂ slightly reduces the CBU and Sᵣₑₗ value compared to the uncoated reactant and 30 wt.-% SiO₂ leads to a significant deterioration. Consequently, a maximum of 6 wt.-% SiO₂ should be used, since a further increase of the SiO₂ content does not lead to an improvement of the photostability (see Fig. 7). A coating with 6 wt.-% SiO₂ leads to a decrease of the Sᵣₑₗ or CBU value of 2.4 or 0.5 compared to the uncoated reactant. Since the uncoated ZnS(O) reactant (4.0 wt.% ZnO) already has a too low CBU -and Sᵣₑₗ value, this also applies to the ZnS(O) coated with 6 wt.-% SiO₂. In order to comply with all the required limits for pigment properties, it is therefore necessary to adjust the colorimetric and scattering properties of the ZnS(O) used so that the Sᵣₑₗ or CBU values before SiO₂ treatment are at least 54.4 and 10, respectively.

### Influence of the calcination of coated samples

The combination of a surface oxide layer and the presence of salts already leads to very high photostabilities of up to 80% (NaCI) and 90% (K₂SO₄). To further increase the photostability to over 90%, the particles can optionally be calcined in CO₂ at 600 °C for 2 hours after coating as indicated in Fig. 9. However, the calcination must be performed in an inert atmosphere, since calcining in an O₂ atmosphere again leads to a drastic decrease in photostability probably due to damage of the coating. However, since the resulting photostability of about 90% before calcination for the case of K₂SO₄-addition is already comparable with the stability of Sachtolith L as indicated in Fig. 10, subsequent calcination in a CO₂ atmosphere is not mandatory. Sachtolith L is the trade name of a ZnS white pigment from Venator Germany GmbH (formerly Sachtleben Ag). The photostability of these ZnS pigment particles is ensured by doping with several hundred ppm cobalt. When comparing the photostability of ZnS(O) - 6 wt.-% SiO₂ with Sachtolith L as reference material, it should be noted that its stability cannot be evaluated by means of the photoluminescence spectra, since Sachtolith L shows no photoluminescence due to cobalt doping. On the basis of the photographs taken before and after irradiation, however, it can be seen that both ZnS(O) - 6 wt.-% SiO₂ and Sachtolith L only grey out very slightly under the very intensive UV irradiation, compared with uncoated cobalt-free ZnS.

The process of according to the present invention represents a new approach to photostable cobalt-free ZnS particles, which could serve as an alternative production method, in case the measure of cobalt doping has to be substituted in the future.

## Claims

1. Particulate cobalt-free ZnS pigment, having a ZnS core, a ZnO layer on the ZnS core, and a silica layer deposited on the ZnO layer.

2. Particulate cobalt-free ZnS pigment according to claim 1, wherein said ZnO layer has a weight percentage in the range of 0< x ≤ 10 wt.-%, preferably in the range of 2-8 wt.-%, more preferably in the range of 3-7 wt.-%, particularly preferably in the range of 4-6 wt.-%, calculated with respect to the total weight of the ZnS pigment.

3. Particulate cobalt-free ZnS pigment according to any one of claims 1 or 2, wherein the silica layer has a weight percentage in the range of 0 < y ≤ 6 wt.-%, preferably in the range of 1-6 wt.-%, more preferably in the range of 3-6 wt.-% calculated as SiO₂, calculated with respect to the total weight of the final ZnS pigment

4. A method for preparing particulate cobalt-free ZnS pigment of any one of claims 1-3, comprising the steps of
a) calcining particulate ZnS base pigment at a temperature in the range of 400-1000 °C, preferably in the range of 500-900 °C, more preferably in the range of 550-850 °C, most preferably in the range of 600-800 °C, particularly preferably in the range of 630-800 °C, in the presence of oxygen for a period of 0.5-4 hours, preferably 1-3 hours, more preferably 1.5-2.5 hours;
b) providing an aqueous suspension of the particulate ZnS pigment obtained in step a);
c) adding to the aqueous suspension of step b) an aqueous solution of a water-soluble silicate, preferably an alkaline metal silicate or ammonium silicate, particularly preferably water glass, at a temperature in the range of 20-100 °C, preferably in the range of 30-95 °C, more preferably in the range of 40-90 °C, particularly in the range of 60-90 °C, at a pH-value in the range of 7-12, preferably at a pH-value in the range of 8-11; more preferably at a pH-value in the range of 9-10, followed by keeping the mixture suspension at the above temperature and pH-value for a period of 0.5-4 hours;
d) adjusting the pH of the suspension of step c) over a time of at least 30 minutes to the range of 4.5-6.5, preferably to the range of 5-6, particularly to 5.5 with an acid;
e) aging the suspension obtained from step d) by stirring said suspension at room temperature for a period of 4-48 hours, followed by filtering off the obtained particles, optional washing the obtained particles, drying the obtained particles at 130 °C, optionally followed by calcining the obtained particles at a temperature in the range of 400-800 °C, preferably in the range of 500-700 °C, more preferably in the range of 550-650 °C for a period of 0.5-4 hours, preferably in an inert atmosphere, preferably in a CO₂ atmosphere, followed by optional grinding, and optional sieving.

5. The method for preparing particulate cobalt-free ZnS pigment according to claim 4, wherein in step c) a salt, preferably an alkaline metal salt, preferably a lithium, sodium, or potassium salt or a mixture thereof, is added to the suspension.

6. The method for preparing particulate cobalt-free ZnS pigment according to claim 5, wherein the salt is a salt of an inorganic acid, preferably of hydrochloric acid, nitric acid, sulfuric acid, phosphoric acid, chloric acid, boric acid or mixture thereof, more preferably of nitric acid or sulfuric acid, particularly preferably of sulfuric acid.

7. The method for preparing particulate cobalt-free ZnS pigment according to any one of claims 5 or 6, wherein the salt has an ionic strength in the range of 0-2 mol/L, preferably in the range of 0.01-1 mol/L.

8. The method of preparing particulate cobalt-free ZnS pigment according to any one of the preceding claims 4-7, wherein the weight ratio of silicate, calculated as SiO₂, with respect to the calcined ZnS base pigment obtained from the process step a) is in the range of 0-6 wt.-% excluding the lower limit, preferably in the range of 1-6 wt.-%, more preferably in the range of 3-6 wt.-%.

9. Use of particulate cobalt-free ZnS pigment according to any one of claims 1-3 or prepared according to the method defined in any one of claims 4-8 as an additive or white pigment in paints, varnishes, powder coatings, printing inks, security printing inks, plastics, molded parts, ceramic materials, glasses, enamels, in cosmetic formulations, for the production of pigmentary tendencies with water, organic and/or aqueous solvents, for the production of pigment preparations and dry preparations.

10. Use of the coated zinc sulfide pigment according to claim 9 in glass fiber reinforced polyamides.

11. Formulations containing the coated zinc sulfide pigment according to any one of claims 1-3 or prepared according to the method defined in any one of claims 4-8.

12. Polymer matrix containing the coated zinc sulfide pigment according to claims 1-3 or prepared according to the method defined in any one of claims 4-8.
